Europäisches Patentamt

European Patent Office

Office européen des brevets

(19)

(11) Publication number: **0 102 777**
**A1**

(12) **EUROPEAN PATENT APPLICATION**

(21) Application number: **83304615.4**

(22) Date of filing: **10.08.83**

(51) Int. Cl.³: **B 62 D 29/04**
**B 29 D 27/04**

(30) Priority: **24.08.82 US 410937**

(43) Date of publication of application:
**14.03.84 Bulletin 84/11**

(84) Designated Contracting States:
**AT BE CH DE FR GB IT LI LU NL SE**

(71) Applicant: **Diesel Equipment Limited**
**139 Laird Drive**
**Toronto Ontario M4G 3V6(CA)**

(72) Inventor: **Martin, Roger J.**
**79 Lascelles Boulevard**
**Toronto Ontario(CA)**

(74) Representative: **Pacitti, Pierpaolo A.M.E. et al,**
**Ian G. Murgitroyd and Company 49 Bath Street**
**Glasgow G2 2DL(GB)**

(54) **Truck bodies.**

(57) A method of manufacturing a truck body having a pair of oppositely disposed upward side walls, an upright end wall, and a horizontal wall comprises the steps of forming a unitary fiberglass outer skin (22) and a unitary fiberglass inner skin (24), mounting the inner skin within the outer skin to form a foam molding chamber (26) therebetween and foaming a foamable plastic material (28) within the foam molding chamber to fill the chamber. The truck body produced thereby comprises a unitary fiberglass outer skin (22) and a unitary fiberglass inner skin (24) spaced from one another by an in situ foamed body of plastic material (28) in the forming of a dump truck body. Longitudinal fiberglass sills (18) are secured to the outer skin and extend longitudinally of the underside of the horizontal wall.

./...

FIG. 6

This invention relates to truck bodies. In particular this invention relates to the use of foam plastic material and fiberglass in the manufacture of truck bodies.

## Prior Art

For many years truck bodies have been manufactured from steel or aluminum.

While steel bodies have greater strength than aluminum and are less expensive than aluminum, they are substantially heavier and susceptible to corrosion. While aluminum bodies are lighter in weight and not as susceptible to corrosion, they are not as strong and wear-resistant as the conventional steel truck body.

Van bodies have been made from fiberglass and a combination of fiberglass and foam plastic material. Generally however the practice is to make the side walls, end wall and roof of the van body as separate components and to interconnect these components after they have been formed. This is a costly method of assembly.

In order to provide good thermal insulation for truck bodies, foam plastic material in the form of panels have been mounted on the interior wall and an inner skin formed over the foam panels. In order to secure the inner skin it has been customary to provide pillars at spaced intervals along the inner face of the outer skin and to fit the foam panels in the spaces provided between the pillars. The inner skin is then secured to the pillars. This results in a structure in which the thermal conductivity of the body is not uniform along its full length. Generally, the thermal conductivity of the pillars which are usually made from wood or metal, such as aluminum or light gage steel, is substantially greater than that of the foam insulating panels. Furthermore, this panelling construction, as well as many other panelling constructions, results in the formation of a plurality of seams spaced apart on the inner face of the truck body and these seams tend to open through use. Debris becomes accumulated at the seams making it difficult to thoroughly clean the container body.

Generally, fiberglass has not been considered material which one might expect to substitute for steel or aluminum in the construction of truck bodies such as the container bodies used on dump trucks and the like. While fiberglass is sufficiently strong and wear-resistant to be used as a substitution for steel or aluminum in many applications, the direct substitution of fiberglass for steel or aluminum in the manufacture of dump trucks would lead to the formation of a container body which would deform under loading to a degree which would not be acceptable in the trucking industry. While this difficulty can be overcome or reduced by increasing the thickness of the fiberglass walls, and by providing stiffeners, this would result in a significant cost increase both in material and labour.

I have found that I can manufacture a truck body using unitary inner and unitary outer fiberglass skins which are spaced a substantial distance from one another by an in situ foamed body of plastics material. My truck body is less expensive to manufacture than a comparable aluminum truck body, substantially lighter in weight than a conventional steel truck body, corrosion resistant and durable at a cost which is substantially less than the cost of a comparable steel structure. Furthermore, my fiberglass truck body may have an exterior finish which is at least as attractive and considerably more durable than that which can be attained using either a painted steel or a painted aluminum structure.

## Summary of Invention

According to one aspect of the present invention, there is provided a method of manufacturing a truck body having a pair of oppositely disposed upright side walls, an upright end wall and a horizontal wall comprising the steps of; forming a unitary fiberglass outer skin having a pair of oppositely disposed upright side walls, an upright end wall and a horizontal wall, forming a unitary fiberglass inner skin having a pair of oppositely disposed upright side walls, an upright end wall and a horizontal wall, supporting said outer skin externally thereof to prevent outward deflection thereof, supporting said inner skin internally thereof to prevent inward deflection thereof, mounting said inner skin within said outer skin with said side walls, end walls and horizontal walls disposed opposite one another in a spaced relationship forming a foam molding chamber therebetween, foaming a foamable plastics material within said foam molding chamber to fill said chamber, removing the thus formed truck body from its internal and external supports.

According to a further aspect of the present invention, there is provided, in a truck body having a pair of oppositely disposed upright side walls, an upright end wall and a horizontal wall, the improvement wherein said truck body comprises; a unitary fiberglass outer skin extending about the exterior surface of said side, end and horizontal walls, a unitary fiberglass inner skin extending about the interior surface of said side, end and horizontal walls, said inner skin being spaced inwardly from said outer skin to form a chamber therebetween, an in situ foamed body of plastics material filling said chamber and supporting said inner and outer skins in a spaced relationship.

According to a further aspect of the present invention, there is provided, a dump truck body comprising; a unitary fiberglass outer skin having a pair of oppositely disposed upright side walls, an upright front wall and a horizontal floor, a unitary fiberglass inner skin having a pair of oppositely disposed upright side walls, an upright front wall and a horizontal floor, said inner skin being spaced inwardly from said outer skin to form a chamber therebetween, an in situ foamed body of foamed plastic material filling said chamber and supporting said inner and outer skins in said spaced relationship.

0102777

D9-2547-92

## Preferred Embodiment

The invention will be more clearly understood after reference to the following detailed specification read in conjunction with the drawings wherein:

Figure 1 is a pictorial view of a dump truck which has a container body constructed in accordance with an embodiment of the present invention;

Figure 2 is a pictorial view of a van which has a van body constructed in accordance with an embodiment of the present invention;

Figure 3 is a pictorial view of a female mold suitable for use in forming an outer fiberglass skin; and

Figure 4 is a pictorial view of a male mold suitable for use in forming the inner fiberglass skin.

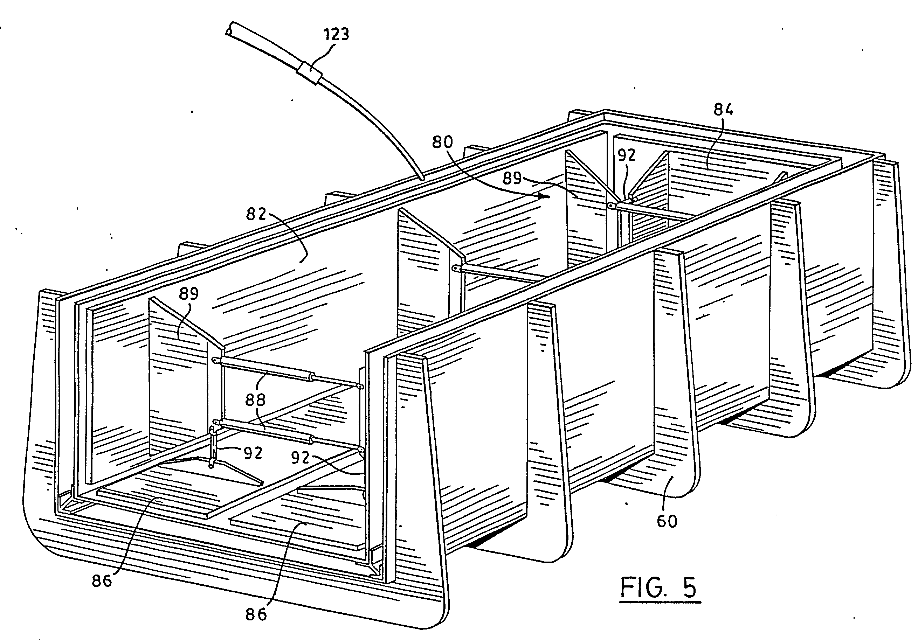

Figure 5 is a pictorial view of a foaming assembly for use during foaming of the cavity formed between the inner and outer skins ;

Figure 6 is a sectional through a dump ttuck body constructed in accordance with an embodiment of the present invention.

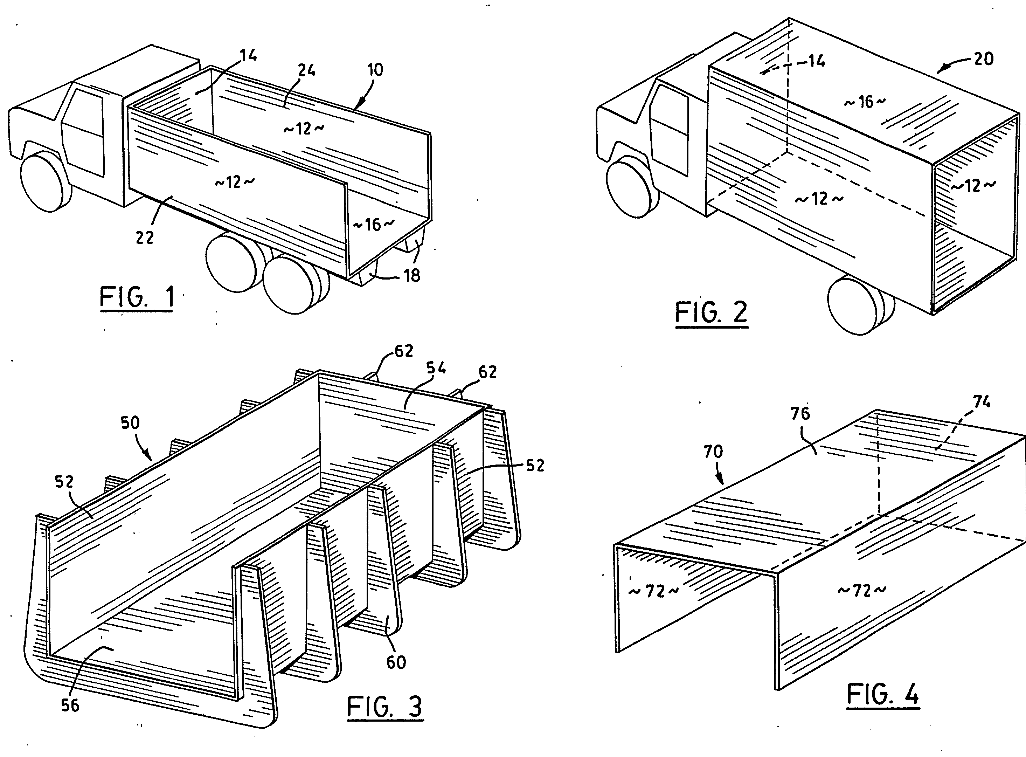

With reference to Figure 1 of the drawings the reference numeral 10 refers generally to a container body in a form suitable for use as a dump truck container body. In Figure 2, the reference numeral 20 refers generally to a container body suitable for use as a van body.

The container bodies 10 and 20 each comprise a pair of oppositely disposed upright side walls 12, an upright end wall 14 and a horizontal wall 16. In the truck container body 10, the horizontal wall 16 forms the floor of the container body and is reinforced by long sills 18 which extend longitudinally thereof. In the van body 20 the horizontal wall 16 forms the roof of the van enclosure.

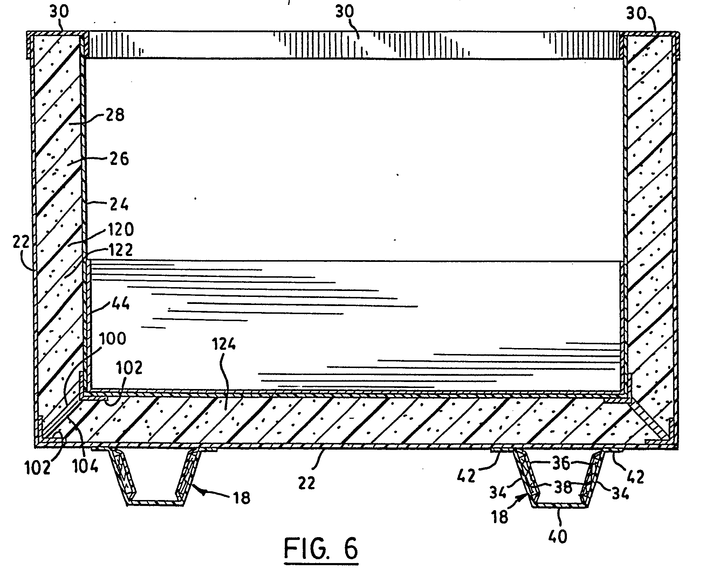

A unitary fibeglass outer skin 22 forms the outer layer of the side walls 12, end wall 14 and horizontal wall 16. Similarly, a unitary fiberglass inner skin 24 forms the inner layer of the side walls 12, end wall 14 and horizontal wall 16. The outer skin 22 and inner skin 24 are spaced from one another to form a chamber 26 therebetween. A foamed body 28 of plastics material fills the chamber 26 and serves to maintain the outer and inner skins 22 and 24 in a spaced relationship. U-shaped fiberglass finishing channels 30 are secured in a position overlying the open ends of the molding chamber 26 and are bonded thereto. A pair of long sills 18 are mounted on and extended longitudinally of the bottom wall 16 of the dump truck container body illustrated in Figure 6.

Each of the sills 18 consists of an outer fiberglass layer 34 and an inner fiberglass layer 36 between which a pair of stiffening panels 38 are located in the side walls of the sill. The stiffening panels 38 may be plywood panels or the like. The outer layer 34 and inner layer 36 are laminated to one another and bonded at the base portion 40 and at the marginal portions 42. In use the marginal portions 42 are bonded to the outer skin 22 in a conventional manner.

In a typical container body constructed for use as a dump truck body, a sheet metal liner 44 may be provided in the lower portion of the body to increase wear-resistance. It will however be understood that this liner is not essential for structural strength and may be dispensed with with many applications.

In a typical dump truck container body, the outer and inner skins are made from a plurality of layers of one and a half ounce fiberglass mat, each layer being impregnated and rolled out. The total thickness of the outer skin 22 is preferably about .100 inches and the total thickness of the inner skin 24 is preferably in the range of .100 inches to .500 inches. The thickness of the foam body 28 between the skins 22 and 24 is preferably in the range of 1 to 3 inches. The greater the thickness of the foam material, the greater the section modulus of the body.

In order to manufacture a container body with the type described, I provided a female mold 50 as illustrated in Figure 3 of the drawings. The mold 50 includes a pair of side walls 52 and end wall 54 and a lower wall 56. The mold 50 is strengthened by stiffening ribs 60 which extend around the side and bottom walls and ribs 62 which extend along the end wall 54. The outer skin 22 is formed by applying a plurality of layers of fiberglass mat to the inner surfaces of the walls 52, 54 and 56,

impregnating each layer with a polyester resin and rolling out each layer and after the required thickness is achieved, allowing the fiberglass to cure.

The inner skin 24 is formed in a similar manner on the male mold 70 (Fig 4) which has side walls 72, end wall 74 and horizontal wall 76. The male mold 70 is proportioned to be smaller than the female mold 50 such that the inner skin which is formed thereon may fit within the inner skin formed in the female mold in a spaced relationship.

After the inner skin has been formed and set it is removed from the mold 70 and is mounted on an inner restraining fixture identified by the reference numeral 80 (Fig. 6). The fixture 80 has a pair of oppositely disposed side wall supports 82, an end wall support 84, and horizontal restraining pads 86. Expandable rams 88 extend between the flanges 89 of side walls 82. Jacks 92 extend between the flanges 89 and the pads 86. Similar jacks 92 extend between the flanges 89 of the side walls 82 and the flanges 89 of the end wall 84.

By activating the rams 88 and jacks 92, the side wall supports 82 and the horizontal support pads 86 and end wall support 84 may be positioned so as to bear against the inner skin 24 to provide internal support during foaming. The rams 88 and jacks 92 may be mechanically or hydraulically activated and may be interconnected so as to operatein concert to provide a uniform support.

In use, the outer skin 22 is formed in the female mold 50 as previously described. Spacer members 100 are then positioned in the lower corners as shown in Figure 6. Each of the spacer members 100 consists of a pair of angle members 102 and a web 104 which extends therebetween. The angle members 102 and the web 104 extend over the full length of the edges of the inner skin 24. A similar spacer extends across the lower edge of the end walls of the outer skin and inner skins. The spacers 100 and serve to space the inner skin 24 from the outer skin 22 to form a molding chamber 120 therebetween. The chamber 120 is divided into compartments 122 and 124 by means of the spacers 100. The ends of the compartments 122 are closed by inserts 126. The end of the compartment 124 is open to permit gunning of foam into the compartment in use. The inner skin 24 is braced by the restraining fixture 80 as previously described and foam is gunned into the open upper ends of the compartments 122 by means of a conventional foaming gun 123. A suitable foam is manufactured by Olin Chemicals and is identified by the trade mark OLIN B7 which is a two-part polyurethane foam. After the chambers 122 have been filled with the foam, the chamber 124 is foam filled. By filling the compartments 122 before the compartment 124, the foamed structure is formed in the compartments 122 serves to lock the inner skin to the outer skin such that when foam is introduced to the chamber 124 it will not lift the inner skin away from the outer skin. .

After foaming, the mold is opened and the container body removed. End caps 30 are then positioned over the open ends of the compartments 122 and 124 so as to fully enclose the body of foam.

When a dump truck container body is manufactured the sills 32 are then applied to the bottom wall portion 16a as previously described.

When a van body is manufactured, it is substantially complete when removed from the mold and need only be secured to the floor of the van in any conventional manner.

Various modifications of the preferred embodiment will be apparent to those skilled in the art without departing from the scope of the claimed invention. For example, the inner and outer skins may be formed by gunning the fiberglass onto the mold surfaces using a conventional chopper gun. The fiberglass being rolled out thereafter in a conventional manner.

From the foregoing it would be apparent that the present invention provides a simple and inexpensive method of manufacturing truck bodies.

I CLAIM.

1. A method of manufacturing a truck body having a pair of oppositely disposed upright side walls, an upright end wall and a horizontal wall comprising the steps of:

(a) forming a unitary fiberglass outer skin having a pair of oppositely disposed upright side walls, an upright end wall and a horizontal wall,

(b) forming a unitary fiberglass inner skin having a pair of oppositely disposed upright side walls, an upright end wall and a horizontal wall,

(c) supporting said outer skin externally thereof to prevent outward deflection thereof,

(d) supporting said inner skin internally thereof to prevent inward deflection thereof,

(e) mounting said inner skin within said outer skin with said side walls, end walls and horizontal walls disposed opposite one another in a spaced relationship forming a foam molding chamber therebetween,

(f) foaming a foamable plastics material within said foam molding chamber to fill said chamber,

(g) removing the thus formed truck body from its internal and external supports.

2. A method as claimed in claim 1 wherein said foamable plastic material is a two-part polyurethane foam.

3. A method as claimed in claim 1 wherein spacer means is positioned within said foam molding chamber so as to support said inner skin in a spaced relationship with respect to said outer skin.

4. A method as claimed in claim 1 wherein said foam molding chamber comprises a first portion disposed between the oppositely disposed upright side walls and end walls and a second portion disposed between the oppositely disposed horizontal walls, the first portion being separated from the second portion by spacer means extending continuously about the periphery of the horizontal walls, said first portion of said molding chamber being foam molded and allowed to cure before said second portion of said foam molding chamber is foamed whereby the cured foam in the first portion of the foam molding chamber serves to lock said oppositely disposed upright side and end walls with respect to one another to prevent relative movement therebetween when foam filling the second portion.

5. A method as claimed in claim 1 wherein said outer skin is formed in a female mold.

6. A method as claimed in claim 5 wherein a gel coat of pigmented resins applied to the surface of the female mold prior to laying in of the fiberglass mat thereby to colour the exterior surface of the outer skin.

7. A method as claimed in claim 1 wherein said inner skin is formed on a male mold.

8. A method as claimed in claim 7 wherein a gel coat of pigmented resins applied to the surface of the male mold prior to laying in of the fiberglass mat thereby to colour the interior surface of the inner skin.

9. In a truck body having a pair of oppositely disposed upright side walls, an upright end wall and a horizontal wall, the improvement wherein said truck body comprises

(a) a unitary fiberglass outer skin extending about the exterior surface of said side, end and horizontal walls,

(b) a unitary fiberglass inner skin extending about the interior surface of said side, end and horizontal walls,

(c) said inner skin being spaced inwardly from said outer skin to form a chamber therebetween,

(d) an in situ foamed body of plastics material filling said chamber and supporting said inner and outer skins in a spaced relationship.

10. A truck body as claimed in claim 9 wherein said foamed plastic material comprises a two-part polyurethane foam.

11. A truck body as claimed in claim 9 wherein said horizontal wall is a roof forming wall of a truck body.

12. A truck body as claimed in claim 9 wherein said horizontal wall is a floor of a truck body.

13. A dump truck body comprising:

(a) a unitary fiberglass outer skin having a pair of oppositely disposed upright side walls, an upright front wall and a horizontal floor,

(b) a unitary fiberglass inner skin having a pair of oppositely disposed upright side walls, an upright front wall and a horizontal floor,

(c) said inner skin being spaced inwardly from said outer skin to form a chamber therebetween,

(d) an in situ foamed body of foamed plastic material filling said chamber and supporting said inner and outer skins in said spaced relationship.

14. A dump truck body as claimed in claim 13 further comprising a pair of fiberglass long sills extending longitudinally of said bottom wall in a spaced parallel relationship and bonded to said fiberglass outer skin.

15. A dump truck as claimed in claim 13 whereas said outer and inner skins are each formed from a plurality of layers of impregnated fiberglass mat.

FIG. 1

FIG. 2

FIG. 3

FIG. 4

0102777

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 849 982 (MICKLEOVER TRANSPORT) <br><br> * Claims 2,5,14,16; page 3, lines 1-12 * | 1-3,5-10,12-15 | B 62 D 29/04 <br> B 29 D 27/04 |
| A | GB-A-1 397 382 (FRUEHAUF) <br> * Claim 1; figures 2,4,6 * | 1,11 | |
| A | US-A-4 093 173 (KAWAMATA et al.) <br><br> * Column 4, lines 18-55; figures 6,8 * | 1,2,5, 7,9,10 ,12 | |
| A | FR-A-2 344 783 (LEFEBVRE) <br><br> * Page 6, lines 5-10; figures 2,3,7 * | 2,4,11 ,12 | TECHNICAL FIELDS SEARCHED (Int. Cl. ³) |
| A | FR-A-1 111 380 (RENAULT) <br> * Page 1, right-hand column, paragraphs 1,2; figures 1,2 * | 14 | B 62 D 29/00 <br> B 62 D 33/00 <br> B 29 D 27/00 <br> B 60 P 1/00 <br> B 60 P 3/00 |
| A | US-A-3 432 979 (HEIMANN) | | |
| A | US-A-3 481 642 (BONALLACK et al.) | | |

The present search report has been drawn up for all claims

| Place of search | Date of completion of the search | Examiner |
|---|---|---|
| THE HAGUE | 18-11-1983 | OSBORNE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82